# EUROPÄISCHE PATENTANMELDUNG

(11) **EP 3 363 958 A1**
(43) Veröffentlichungstag der Anmeldung: **22.08.2018**
(21) Anmeldenummer: 17156627.6
(22) Anmeldetag: 17.02.2017
(51) Int. Cl.: E04B 1/66, E04B 1/68, C04B 28/02

(54) **ABDICHTUNG FÜR EIN BETONELEMENT UND VERFAHREN ZUR HERSTELLUNG EINER ABDICHTUNG**

(71) Anmelder: CEMproof Group GmbH, 71083 Herrenberg (DE)
(72) Erfinder: Pflieger, Adrian, 71083 Herrenberg (DE)
(74) Vertreter: Kohler Schmid Möbus Patentanwälte

(57) **Zusammenfassung**

Die Erfindung betrifft eine Abdichtung für ein Betonelement, umfassend einen flächigen Träger und eine auf den Träger aufgebrachte Wirksubstanz, wobei die Wirksubstanz mit Wasser chemisch reagierend ausgebildet ist. Erfindungsgemäß ist der Träger flexibel.

## Beschreibung

Die Erfindung betrifft eine Abdichtung für ein Betonelement, umfassend einen flächigen Träger und eine auf den Träger aufgebrachte Wirksubstanz, wobei die Wirksubstanz mit Wasser chemisch reagierend ausgebildet ist.

Bauwerke werden heute in verstärktem Maße als wasserundurchlässige Betonkonstruktionen ausgebildet.

Dazu ist es im Stand der Technik bekannt, Fugen, Risse und dergleichen in einem Betonelement mittels nachträglicher Riss-Injektionen abzudichten. Dabei ist jedoch jeder Riss einzeln zu behandeln. Auch sind regelmäßige Kontrollen zur Suche und Behandlung etwaiger neuer Risse erforderlich.

Alternativ kommen so genannte Frischbetonverbundfolien zur flächigen Abdichtung eines Betonelements zum Einsatz. Diese Frischbetonverbundfolien werden auf das abzudichtende Betonelement aufgebracht. Sie erreichen ihre Dichtwirkung durch eine integrierte Folie, die beispielsweise aus PVC oder PE hergestellt ist.

Nachteilig dabei ist, dass nach Aufbringen einer solchen Frischbetonverbundfolie von Anfang an keine Feuchtigkeit mehr an das Betonelement gelangen kann. Insbesondere wird somit eine grundsätzlich wünschenswerte Nachhydratation unterbunden. Wird im Lauf der Zeit die Frischbetonverbundfolie beschädigt oder reißt diese durch Alterung ein, so geht die Schutzwirkung der Folie großflächig verloren.

Aus der EP 0 992 466 B1 ist ein Dichtungselement bekannt, das jedoch anstelle einer auf den Träger aufgebrachten Wirksubstanz eine wasserabweisende Beimengung aufweist. Die wasserabweisende Beimengung kann physikalisch in alkalischen Medien aufgelöst werden, sodass dann eine (wasserquellbare) Wirksubstanz zu quellen beginnen kann.

Aus der EP 1 571 271 B2 ist eine Abdichteinrichtung zur Abdichtung von Arbeitsfugen bekannt, bei der der Träger als verzinktes Trägerblech und somit starr ausgebildet ist. Zur Abdichtung der Arbeitsfuge wird die Abdichteinrichtung in die Arbeitsfuge eingebracht.

Auch ist es bekannt, bei Wasserkontakt stark quellendes Bentonit zwischen zwei Geotextilien einzulagern. Eine solche Abdichtung kommt beispielsweise im Deponiebau zum Einsatz und wirkt, indem im Laufe der Zeit Feuchtigkeit bis zum Bentonit vordringt, sodass dieses aufquillt und letztlich die Abdichtwirkung entwickelt.

Aufgabe der Erfindung ist es, eine gattungsgemäße Abdichtung für ein Betonelement zu verbessern.

Gelöst wird die Aufgabe durch eine Abdichtung für ein Betonelement, umfassend einen flächigen Träger und eine auf den Träger aufgebrachte Wirksubstanz, wobei die Wirksubstanz mit Wasser chemisch reagierend ausgebildet ist und wobei der Träger flexibel ist.

Die Wirksubstanz kann auf dem Träger von diesem ablösbar aufgebracht sein. Insbesondere kann die Wirksubstanz in einem alkalischen Medium und/oder durch ein Medium, insbesondere ein alkalisches, wasserhaltiges Medium, vom Träger ablösbar sein. Dabei kann vorgesehen sein, dass die Wirksubstanz aus ihr herauslösbare Substanzen umfasst, die insbesondere eine mechanische und/oder chemische Abdichtwirkung aufweisen. Beispielsweise kann die Wirksubstanz eine kalksteinbildende Substanz aufweisen.

Der flexible Träger kann insbesondere nicht starr, d. h. in sich beweglich, sein. Der Träger kann inelastisch flexibel sein. Da der Träger flexibel ist, kann die Abdichtung noch leichter gehandhabt werden, insbesondere kann sie auch auf Betonelementen angeordnet werden, die eine unebene Oberfläche aufweisen. Die Abdichtung kann somit sowohl zur Abdichtung von Fugen, insbesondere Arbeitsfugen, als auch zur Abdichtung insbesondere unebener Oberflächen von Betonelementen eingesetzt werden. Die Betonelemente und/oder Betonflächen der Betonelemente können erdberührend angeordnet sein. Sie können auch einer Wasserbelastung ausgesetzt sein.

Da die Wirksubstanz auf den flexiblen Träger aufgebracht ist, kann eintreffende Feuchtigkeit die Wirksubstanz sehr gut erreichen. Die Wirksubstanz kann dann mit der Feuchtigkeit chemisch reagieren. Die Feuchtigkeit bzw. Wasser kann beispielsweise aus einer Betonrandzone eines frisch verarbeiteten Betonelements stammen, auf der die Abdichtung angeordnet ist. Die Feuchtigkeit kann auch aus der Umgebung stammen.

Das Wasser kann alkalisch sein und/oder die Wirksubstanz kann mit alkalischem Wasser chemisch reagierend ausgebildet sein.

Somit können Eigenschaften, insbesondere Dichteigenschaften, der Abdichtung auch noch nach Herstellung bzw. nach Verarbeitung selbsttätig durch chemische Reaktionen modifiziert werden. Eine solche Modifikation kann sich auch über einen längeren Zeitraum erstrecken, mithin kann eine solche Modifikation auch kontinuierlich erfolgen. Die Modifikationen können auch begrenzt auf ein oder mehrere Bereiche des Trägers, insbesondere je nach flächenhafter Verteilung der Feuchtigkeit, erfolgen.

Die Menge eintreffender Feuchtigkeit kann auch davon abhängen, ob jeweils lokal Risse, Fehlstellen oder dergleichen in der Abdichtung und/oder an einem Betonelement, auf das die Abdichtung aufgebracht ist, vorliegen.

Es kann vorgesehen sein, dass die Abdichtung nach ihrer Herstellung, insbesondere vor Verwendung zur Abdichtung eines Betonelements, mindestens schwach wasserdurchlässig ist.

Die Wasserdurchlässigkeit kann anhand des Durchlässigkeitsbeiwertes gemessen werden. Insbesondere kann die Abdichtung mindestens schwach wasserdurchlässig sein, wenn sie einen Durchlässigkeitsbeiwert von mindestens 10⁻⁹ m/s aufweist.

Eine besonders günstige Abdichtwirkung lässt sich erzielen, wenn der Durchlässigkeitsbeiwert zwischen 10⁻⁹ m/s und 10⁻⁸ m/s liegt.

Der Durchlässigkeitsbeiwert kann auch bis zu 10⁻⁴ m/s betragen. In diesem Fall kann Wirksubstanz besonders leicht zum Betonelement gelangen. Insbesondere kann durch die Alkalität des Betonelements, insbesondere bei frischem Beton, die Wirksubstanz aktiv herausgelöst werden. Sie kann dann in und/oder am Betonelement chemisch reagieren.

Somit kann auch nach Aufbringen der Abdichtung auf das Betonelement Feuchtigkeit durch die Abdichtung hindurch zum Betonelement gelangen. Das Betonelement kann Feuchtigkeit aufnehmen und beispielsweise nachhydrieren. Das Betonelement, insbesondere eine Betonrandzone des Betonelements, kann somit auch nachdichten.

Durch einen gezielten, jedoch dennoch durch die Abdichtung begrenzten, anfänglichen Wasser- bzw. Feuchtigkeitsstrom durch die Abdichtung hindurch kann Wirksubstanz vom Träger zum Betonelement mitbefördert werden und dort eine lokale Abdichtung unterstützen und/oder aktiv anstoßen. Die Wirksubstanz kann auch eine Katalysatorfunktion, insbesondere zur Selbstdichtung des Betonelements, aufweisen.

Insbesondere können so Risse, Fehlstellen und dergleichen jeweils lokal im Bereich eines Risses bzw. einer Fehlstelle oder dergleichen abgedichtet werden. Mit anderen Worten kann die Abdichtung ihre Wirkung insbesondere dort entfalten, wo die Abdichtwirkung "benötigt" wird, da in diesen Bereichen auch in der Regel stärkere Feuchtigkeitsströme entstehen. Etwaige Risse im Betonelement können somit im Sinne einer "Selbstheilung° des Betonelements (und nicht nur der Abdichtung selbst) abgedichtet werden.

Im Gegensatz zu den eingangs beschriebenen Frischbetonverbundfolien kann die erfindungsgemäße Abdichtung somit nicht nur durch sich selbst als Feuchtigkeitsschranke oder -hindernis wirken, sondern auch zu einer Verbesserung der Dichtheit des Betonelements selbst aktiv beitragen. Selbst wenn die Abdichtung lokal beschädigt und somit die Wasserdurchlässigkeit im Bereich der Schadstelle erhöht wird, kann die Abdichtwirkung für die übrigen abgedichteten Bereiche und gegebenenfalls sogar auch für die Schadstelle zumindest weitgehend erhalten bleiben.

Auch kann vorgesehen sein, dass die Abdichtung im Laufe der Zeit ihre Wasserdurchlässigkeit, ausgehend von ihrer nach ihrer Herstellung bestehenden Wasserdurchlässigkeit, ändert. So kann die Abdichtung beispielsweise selbst aufquellend ausgebildet sein und somit ihre Wasserdurchlässigkeit im Laufe der Zeit verringern. Wird eine solche Abdichtung beschädigt, kann somit auch die Schadstelle selbst selbsttätig durch die Abdichtung teilweise oder vollständig beseitigt werden.

Es kann vorgesehen sein, dass der Träger als Geomembran, Geotextilie, Folie und/oder Vlies, insbesondere als PP-Vlies, als PE-Vlies, als PE-Gewebe, als PP-Gewebe, als Vlies-Gewebe-Kombination, besonders bevorzugt als mechanisch verbundene Vlies-Gewebe-Kombination, ausgebildet ist.

Solche Geomembranen, Geotextilien und/oder Vliese sind kostengünstig verfügbar und können selbst große Betonelemente überdecken bzw. abdichten. Auch kann ein solcher Träger zur Armierung, zur Nachbehandlung der Betonrandzone und/oder zur Reduktion von Poren des Betonelements beitragen.

Denkbar ist auch, dass die Wirksubstanz einen Zement, Quarz, ein Silikat, eine Asche, insbesondere Flugasche, ein Calciumhydroxid, ein Carbonat, insbesondere ein Hydrogencarbonat, ein Nichthydrogen-Carbonat und/oder ein Calciumcarbonat, aufweist oder ein solcher bzw. ein solches ist.

Eine solche Wirksubstanz kann eine Abdichtung auf chemische, physikalische und/oder mechanische Weise ermöglichen. Besonders dabei ist, dass sowohl eine Abdichtwirkung durch die Abdichtung als auch durch ein abzudichtendes Betonelement erzeugt werden kann.

So kann zur physikalischen Abdichtung die Wirksubstanz quellend sein. Beispielsweise kann in der Wirksubstanz enthaltener Zement bzw. Zementstein aufquellen. Dadurch kann die anfängliche Wasserdurchlässigkeit der Abdichtung, insbesondere nach Ablauf bzw. über eine definierte Zeitspanne hinweg, reduziert werden. In der auf dem Träger aufgetragenen Wirksubstanz enthaltener Zement bzw. Zementstein kann auch zum Betonelement transportiert werden, dort aufquellen und beispielsweise lokal Risse oder Poren im Betonelement verschließen.

Insbesondere durch Nachhydratisieren von Zement bzw. Zementstein und/oder durch Bildung von (wasserunlöslichem) Calciumcarbonat kann eine chemische Abdichtwirkung erreicht werden.

Eine mechanische Abdichtung kann durch Einengung bzw. Blockieren eines Strömungspfades durch anorganische oder organische Feinstoffe, beispielsweise Quarzsilikat oder Asche, erzielt werden. Es versteht sich, dass auch andere Wirksubstanzen wie Zement, Calciumhydroxid, Carbonate als Feinstoffe eine mechanische Abdichtwirkung, insbesondere ergänzend, entfalten können.

Eine besonders günstige Abdichtwirkung lässt sich durch Kristallisation bzw. Versinterung erreichen. Dazu kann insbesondere Calciumcarbonat in der Wirksubstanz vorgesehen sein bzw. durch die Wirksubstanz freigesetzt werden. Dieses kann sich entlang des Strömungspfades des Wassers am Betonelement absetzen und dort Risse oder dergleichen zusetzen und abdichten.

Ein solcher mechanischer Rissverschluss kann insbesondere in einer Anfangsphase durch derartige Feinstoffe bzw. Partikel erreicht werden.

Denkbar ist insbesondere, dass die Wirksubstanz einen Haftvermittler enthält.

Der Haftvermittler kann wasserunlöslich sein. Er kann in einem alkalischen Medium löslich sein. Auch ist denkbar, dass der Haftvermittler wasserdurchlässig ist.

Der Haftvermittler kann als Dispersion in die Wirksubstanz eingemengt sein. Insbesondere kann die Wirksubstanz eine dispergierende Phase mit haftvermittelnder Wirkung aufweisen.

Dadurch kann die Wirksubstanz auf den Träger aufgetragen werden und an diesem verbessert anhaften, wodurch ein Auftragen der Wirksubstanz und eine spätere Verwendung der Abdichtung, beispielsweise vor Ort an einer Baustelle, erleichtert werden kann.

Insbesondere kann die Wirksubstanz als eine erste Komponente den Haftvermittler, insbesondere als Dispersion und/oder als dispergierende Phase, und als eine zweite Komponente einen Zement, ein Calciumhydroxid und/oder eine Mischung aus Quarz, einem Silikat, Flugasche, einem Nichthydrogen-Carbonat und einem Hydrogencarbonat umfassen.

Mit anderen Worten kann die Substanz jedenfalls den Haftvermittler, beispielsweise als Kunststoffdispersion, enthalten. Dazu kann der Haftvermittler in die übrige Wirksubstanz eingemischt bzw. mit dieser vermengt sein. Dann kann das spätere Abdichtmaterial bzw. die zweite Komponente auf einfache Weise am oder auf dem Träger an- bzw. aufgebracht und somit zumindest temporär fixiert werden. Mit anderen Worten kann die Wirksubstanz besonders gut anhaftbar sein. Insbesondere kann sie auch eine flächige Einheit bilden.

Die Wirksubstanz kann ein Elastifizierungsmittel aufweisen. Das Elastifizierungsmittel kann beispielsweise eine kunststoffbasierte Substanz sein. Beispielsweise kann das Elastifizierungsmittel eine Kunststoffdispersion und/oder eine dispergierende Phase einer Kunststoffdispersion sein. Das Elastifizierungsmittel kann insbesondere ausgebildet sein, die Sprödigkeit wenigstens eines anderen Bestandteils der Wirksubstanz, beispielsweise Zement, zu verringern und/oder dessen Elastizität zu verbessern. Das Elastifizierungsmittel kann auch ausgebildet sein, die Elastizität und/oder Flexibilität der auf dem Träger aufgebrachten Wirksubstanz zu verbessern.

Allgemein kann die Wirksubstanz eine Art einer dispergierenden Phase aufweisen. Auch kann die Wirksubstanz wenigstens zwei verschiedene Arten einer dispergierten Phase aufweisen. Beispielsweise kann eine erste Art einer dispergierten Phase eine haftvermittelnde Eigenschaft aufweisen und/oder ein Haftvermittler sein und eine zweite Art einer dispergierenden Phase kann eine elastifizierende Eigenschaft aufweisen und/oder ein Elastifizierungsmittel sein.

Mit anderen Worten kann in die Wirksubstanz bei der Herstellung eine Dispersion, bevorzugt wenigstens zwei verschiedene Arten von Dispersionen, eingemischt sein.

Die Dispersion kann beispielsweise eine Latexdispersion oder eine Wasser-Kunststoff-Dispersion sein.

Die Wirksubstanz kann, vorzugsweise als Dispersion bzw. in Form einer dispergierenden Phase, Vinylacetat-Ethylen, ein Ethylen-Vinylacetat-Copolymer und/oder Vinylacetat aufweisen.

Auch kann die Wirksubstanz ein, vorzugsweise wasserquellbares, Polymer, insbesondere ein Liquiddispersionspolymer oder ein Superabsorberpolymer, aufweisen. Der Massenanteil des Polymers an der Wirksubstanz kann zwischen 40 % und 60 %, insbesondere 50 %, betragen.

Das Polymer, insbesondere das Liquiddispersionspolymer oder das Superabsorberpolymer, kann ein hohes Quellvolumen aufweisen und/oder haftvermittelnd sein. Das Polymer kann zur Herstellung der Wirksubstanz als Dispersion in die Wirksubstanz eingemischt sein. Insbesondere kann das Polymer als dispergierende Phase in der Wirksubstanz enthalten sein.

Bei Wasserdurchfluss kann es somit besonders stark aufquellen und die Wasserdurchlässigkeit des Trägers reduzieren. Dadurch kann insbesondere nach Einschwemmen der Wirksubstanz bzw. einer Komponente der Wirksubstanz auf das Betonelement der Wasserdurchfluss durch den Träger reduziert werden. Eine Anlagerung, Versinterung und/oder Reaktion der Wirksubstanz bzw. der Komponente am bzw. mit dem Betonelement und damit die lokale Abdichtwirkung werden somit weiter verbessert.

Auch kann das Polymer selbst als Träger vorgesehen sein. Dabei kann insbesondere vorteilhaft sein, dass das Polymer, insbesondere das Liquiddispersionspolymer und/oder das Superabsorberpolymer, eine gute Anhaftung an Beton aufweisen kann. Somit kann das Polymer bzw. der Träger bereits selbst von sich aus am Betonelement anhaften. Eine zusätzliche Befestigung der Abdichtung am Betonelement kann somit entfallen. Alternativ kann der Träger auch mit dem Polymer vorbeschichtet sein, beispielsweise kann der Träger dadurch ein Quellvlies sein.

Der (flächig ausgebildete) Träger kann auf einer oder auf beiden seiner Flächenseiten Wirksubstanz aufweisen.

Beispielsweise kann der Träger nur auf einer seiner beiden Flächenseiten Wirksubstanz aufweisen. Dann kann auf der anderen Flächenseite, die beispielsweise von dem Betonelement weggewandt ausgerichtet sein kann, die Abdichtung bzw. der Träger mit den Anforderungen einer jeweiligen Einbausituation entsprechenden zusätzlichen Eigenschaften, insbesondere Oberflächeneigenschaften, versehen werden. Weist dagegen der Träger auf beiden Flächenseiten Wirksubstanz auf, so kann die Menge an Wirksubstanz pro Flächeneinheit des Trägers erhöht werden.

Besonders vorteilhaft ist es, wenn die Abdichtung auf wenigstens einer Flächenseite des Trägers eine vordefinierte Mindest-Rauigkeit aufweist.

Durch die Mindest-Rauigkeit kann die Verbindung zwischen der Abdichtung und dem Betonelement verbessert werden. Insbesondere kann auch ein etwaiger Kraft- und/oder Formschluss durch "Verkrallung" mit dem mit der Abdichtung versehenen Betonelement verbessert werden.

Ergänzend oder alternativ kann auch vorgesehen sein, dass die Wirksubstanz selbst mit dem Betonelement eine Verbindung eingeht. Auch kann der Träger, insbesondere unabhängig von der Wirksubstanz, eine Verbindung mit dem Betonelement aufbauen.

Auch kann vorgesehen sein, dass die Abdichtung auf wenigstens einer Flächenseite des Trägers eine, vorzugsweise wasser- und/oder gasundurchlässige, Kaschierung aufweist. Insbesondere kann vorgesehen sein, dass die Kaschierung ablösbar auf der Abdichtung aufgebracht ist. Dann kann die Kaschierung die Abdichtung insbesondere während einer Lagerung bis zur Verwendung der Abdichtung geschützt werden. Zur Verwendung kann die Kaschierung von der Abdichtung abgelöst werden, sodass dann die Abdichtwirkungen der Abdichtung genutzt werden können.

Auch kann die Kaschierung - insbesondere je nach Anwendungsfall - weitere Eigenschaften der Abdichtung, insbesondere einer Flächenseite des Trägers, erzeugen. Beispielsweise kann das Betonelement vor Betonalterung weiter geschützt werden, indem eine Kaschierung verwendet wird, die betonzerstörende Stoffe vom Betonelement abhält.

Auch kann die Kaschierung beispielsweise eine vordefinierte Mindestgasundurchlässigkeit, insbesondere gegenüber Radon und/oder Methan, aufweisen. Mit anderen Worten kann die Kaschierung gasundurchlässig, insbesondere gegenüber Radon und/oder Methan, sein.

Die Herstellung einer erfindungsgemäßen Abdichtung, umfassend einen flächigen, flexiblen Träger und eine Wirksubstanz, kann die Schritte umfassen:
a) Ausrüsten des Trägers mit einem Haftvermittler, insbesondere als Dispersion, und/oder einem Polymer, insbesondere Liquiddispersionspolymer und/oder Superabsorberpolymer und
b) Aufbringen der übrigen Wirksubstanz auf den Träger, insbesondere durch Aufwalzen, Aufsprühen der Wirksubstanz auf den Träger und/oder durch Tauchen und/oder Tränken des Trägers in bzw. mit der übrigen Wirksubstanz.

Somit kann zur Herstellung zunächst das Polymer und/oder die Dispersion auf den Träger aufgebracht werden, sodass die nachfolgend aufgebrachte übrige Wirksubstanz besser am Träger fixiert bliebt.

Dazu kann vorteilhafterweise die Wirksubstanz zunächst flüssig sein. Nach dem Aufbringen kann sie, insbesondere der enthaltene Haftvermittler, auf dem Träger auftrocknen.

Alternativ kann auch zunächst die Wirksubstanz angemischt werden und dann anschließend auf den Träger aufgebracht, insbesondere aufgewalzt oder aufgesprüht werden, und /oder durch Tauchen und/oder Tränken des Trägers mit der Wirksubstanz auf diesen aufgebracht werden.

Dazu kann vorteilhafterweise die Wirksubstanz auch Haftvermittler enthalten. Um ein vorzeitiges Aushärten zu vermeiden, kann die Wirksubstanz mittels eines Mischers in Bewegung gehalten werden.

Anschließend kann noch eine, insbesondere wasser- und/oder gasundurchlässige, Kaschierung, vorzugsweise beidseitig der Abdichtung, auf diese, vorzugsweise ablösbar, aufgebracht werden.

Die Abdichtung kann dann verwendet werden. Dazu kann zunächst auf einer Seite die Kaschierung abgelöst werden. Die Abdichtung kann mit dieser Seite auf ein abzudichtendes Betonelement aufgebracht bzw. an diesem angeordnet werden. Anschließend kann die Kaschierung der anderen Seite abgelöst werden. Die Abdichtung schützt dann das Betonelement bzw. dichtet dieses ab.

In den Rahmen der Erfindung fällt auch ein Verfahren zur Herstellung eines abgedichteten Betonelements. Erfindungsgemäß wird dazu
a) eine Seite einer Schalung mit einer erfindungsgemäßen Abdichtung ausgerüstet und
b) gegen die mit der Abdichtung ausgerüstete Seite der Schalung betoniert.

Nach Aushärten des Betonelements kann dann die Schalung entfernt werden. Dabei kann vorzugsweise die Abdichtung am und/oder im Betonelement und/oder dessen Oberfläche verbleiben.

Somit kann auf besonders einfache Weise ein in Schalungstechnik hergestelltes Betonelement gefertigt werden, das mit einer erfindungsgemäßen Abdichtung abgedichtet ist.

Dazu kann vorgesehen sein, dass die Abdichtung an die Seite der Schalung geheftet, insbesondere mit einem Tacker geheftet wird. Als Heftmittel können Tackerklammern verwendet werden.

Dabei kann der Umstand genutzt werden, dass die Abdichtung einerseits hinreichend sicher an der Seite der Schalung befestigt werden kann, andererseits die Heftung hinreichend locker bzw. hinreichend gut ablösbar ist, damit die Abdichtung bei Entfernen der Schalung am Betonelement und nicht an der Schalung verbleibt.

Weitere Merkmale und Vorteile der Erfindung ergeben sich aus der nachfolgenden detaillierten Beschreibung eines Ausführungsbeispiels der Erfindung, von Varianten des erfindungsgemäßen Verfahrens sowie aus den Ansprüchen.

Die einzelnen Merkmale können je einzeln für sich oder zu mehreren in beliebigen Kombinationen bei Varianten der Erfindung verwirklicht sein.

### Herstellung

Als Grundlage der Abdichtung kann zunächst ein flexibler Träger, beispielsweise eine Geotextilie, bereitgestellt werden. Alternativ kann auch ein flexibles Polymer flächenhaft, insbesondere netzartig, ausgebildet werden. In diesem Ausführungsbeispiel wird eine netzartige bzw. maschig strukturierte, flexible Geotextilie als Träger bereitgestellt, sodass diese selbst wasserdurchlässig ist.

Anschließend werden zur Herstellung der Wirksubstanz zunächst ein Haftvermittler, insbesondere in Form einer Kunststoffdispersion, und Zement und ein Liquiddispersionspolymer miteinander vermengt.

Die Wirksubstanz wird dann auf den Träger aufgebracht, beispielsweise aufgesprüht. Insbesondere durch das Liquiddispersionspolymer als auch durch den Haftvermittler haftet dabei die Wirksubstanz am Träger an, sodass die Wirksubstanz leichter auf den Träger aufgebracht werden kann.

Durch Wahl der Maschenweite des Trägers sowie der flächenspezifischen Mengen aufgebrachter Wirksubstanz lässt sich die Wasserdurchlässigkeit der Abdichtung einstellen. In diesem Ausführungsbeispiel ist die Wasserdurchlässigkeit derart eingestellt, dass die Abdichtung mindestens schwach wasserdurchlässig ist.

Die Abdichtung wird anschließend getrocknet, bis die Wirksubstanz am Träger fest anhaftet.

Anschließend wird beidseitig eine Kaschierung ablösbar auf die Abdichtung aufgebracht.

In einer alternativen Variante wird die Abdichtung vollständig getrocknet und auf eine Kaschierung verzichtet.

### Verwendung

Ein abzudichtendes Betonelement, beispielsweise ein Betonelement einer Wand, kann wie folgt geschützt bzw. abgedichtet werden:
Zunächst wird auf einer Seite die gegebenenfalls vorhandene Kaschierung entfernt. Die Abdichtung wird flächig auf das Betonelement aufgelegt und bedarfsweise leicht angedrückt. Durch die Flexibilität des Trägers schmiegt sich die Abdichtung an die Oberfläche des Betonelements an. Soll ein großflächiges Betonelement abgedichtet werden, so genügt es, ein Teilstück der Abdichtung mit einem daneben anzuordnenden weiteren Teilstück lose zu überlappen, wobei gegebenenfalls zuvor zumindest ein entsprechendes Teilstück der Kaschierung der anderen Seite abgelöst wird. Die Teilstücke der Abdichtung müssen in der Regel nicht miteinander verschweißt, verklebt oder anderweitig zueinander abgedichtet werden. Insbesondere durch einen Teil des in der Wirksubstanz enthaltenen Zements wird eine Verbindung zwischen der Abdichtung und dem Betonelement hergestellt, sodass die Abdichtung dauerhaft am Betonelement fixiert ist.

Abschließend wird gegebenenfalls die restliche Kaschierung abgelöst bzw. von der Abdichtung entfernt.

Soll ein Betonelement in Schalungstechnik hergestellt und abgedichtet werden, so wird bei einer Variante des Verfahrens zunächst wenigstens eine Seite oder je nach Abdichtungsbedarf mehrere Seiten der Schalung mit der Abdichtung ausgerüstet. Je nach Bedarf wird dazu zuvor die Kaschierung entfernt. Dann wird die Abdichtung an die Schalung mit Tackerklammern geheftet. Anschließend wird gegen die Schalung betoniert und dadurch das Betonelement hergestellt. Nach Aushärten des Betons wird die Schalung entfernt.

Nach Erkenntnissen des Erfinders ist dabei festzustellen, dass die Abdichtung während des Betonierens und/oder des Aushärtens am Beton anhaftet und/oder sich an und in diesem verkrallt.

Wird anschließend die Schalung entfernt, so löst sich die geheftete Abdichtung von der Schalung und verbleibt am Betonelement.

Das Betonelement ist zu Anfang nicht hermetisch vor Feuchtigkeit bzw. Wasser geschützt. Vielmehr kann Wasser aufgrund der Wasserdurchlässigkeit der Abdichtung bis zum Bauelement durchdringen. Wirksubstanz kann zudem chemisch mit dem Wasser reagieren.

Im Zeitverlauf durchläuft die Abdichtung insbesondere im Wesentlichen drei Phasen.

Zu Beginn bzw. in einer ersten Phase wird durch den Träger zunächst die Betonrandzone des Betonelements verbessert. Wasserlunker und Porengefüge werden zumindest teilweise ausgeglichen oder reduziert.

In einer zweiten Phase werden durch den insbesondere anfänglich durch die Abdichtung hindurchtretenden Feuchtigkeits- bzw. Wasserstrom Wirksubstanz bzw. ein oder mehrere Komponenten der Wirksubstanz zum Betonelement transportiert. Dieser Transport findet insbesondere an den Stellen statt, an denen ein Reparaturbedarf besteht, d. h. insbesondere an Rissen, Fehlstellen und dergleichen. Da sich der flexible Träger an das Betonelement anschmiegt, werden ein Ausspülen der Wirksubstanz bzw. der Komponenten über einen sonst zwischen Abdichtung und Betonelement etwaig vorhandenen Spalt vermieden und der Transportweg so kurz gehalten, dass ausreichend Wirksubstanz bzw. die Komponenten zum Betonelement gelangen.

Während des Wasserdurchtritts quillt insbesondere das Liquiddispersionspolymer auf und verringert somit den Wasserdurchfluss durch die Abdichtung.

In einer dritten Phase und insbesondere in Verbindung mit der am Betonelement verbleibenden Feuchtigkeit reagiert die transportierte Wirksubstanz bzw. die Komponenten am und/oder mit dem Betonelement chemisch. Je nach Wirksubstanz bzw. Komponente kommt es beispielsweise zu einer Versinterung, wodurch dauerhaft Risse, Fehlstellen und dergleichen zugesetzt und dadurch abgedichtet werden.

Darüber hinaus bewehrt der Träger das Betonelement an der Betonrandzone und minimiert dadurch das Risiko einer zukünftigen Rissbildung zusätzlich.

Während bei einer herkömmlichen Frischbetonverbundfolie eine Beschädigung, selbst eine lokale Beschädigung wie beispielsweise ein Einriss, in der Regel zu einem weitgehenden Verlust der Abdichtwirkung führt, kann die erfindungsgemäße Abdichtung weiterhin weitestgehend eine Abdichtwirkung bzw. einen Schutz des Betonelements gewährleisten. Da die Abdichtwirkung nicht allein durch die Dichtheit der Abdichtung selbst gewährleistet wird, sondern auch durch das Zusammenspiel der Abdichtung, transportierter Wirksubstanz und dadurch induzierter Selbstheilung des Betonelements an Schadstellen, bleibt die Abdichtwirkung weiterhin weitgehend erhalten.

Ein verbesserter, langanhaltender und insbesondere aktiver Schutz des Betonelements wird somit durch die erfindungsgemäße Abdichtung ermöglicht.

## Patentansprüche

1. Abdichtung für ein Betonelement, umfassend einen flächigen Träger und eine auf den Träger aufgebrachte Wirksubstanz, wobei die Wirksubstanz mit Wasser chemisch reagierend ausgebildet ist, **dadurch gekennzeichnet, dass** der Träger flexibel ist.

2. Abdichtung nach Anspruch 1, **dadurch gekennzeichnet, dass** die Abdichtung nach ihrer Herstellung, insbesondere vor Verwendung zur Abdichtung eines Betonelements, mindestens schwach wasserdurchlässig ist.

3. Abdichtung nach einem der vorhergehenden Ansprüche, **dadurch gekennzeichnet, dass** der Träger als Geomembran, Geotextilie, Folie und/oder Vlies, insbesondere als PP-Vlies, als PE-Vlies, als PE-Gewebe, als PP-Gewebe, als Vlies-Gewebe-Kombination, besonders bevorzugt als mechanisch verbundene Vlies-Gewebe-Kombination, ausgebildet ist.

4. Abdichtung nach einem der vorhergehenden Ansprüche, **dadurch gekennzeichnet, dass** die Wirksubstanz einen Zement, Quarz, ein Silikat, eine Asche, insbesondere Flugasche, ein Calciumhydroxid, ein Carbonat, insbesondere ein Hydrogencarbonat, ein Nichthydrogen-Carbonat und/oder Calciumcarbonat, aufweist oder ein solcher bzw. ein solches ist.

5. Abdichtung nach einem der vorhergehenden Ansprüche, **dadurch gekennzeichnet, dass** die Wirksubstanz einen Haftvermittler enthält.

6. Abdichtung nach einem der vorhergehenden Ansprüche, **dadurch gekennzeichnet, dass** die Wirksubstanz ein Elastifizierungsmittel aufweist.

7. Abdichtung nach einem der vorhergehenden Ansprüche, **dadurch gekennzeichnet, dass** die Wirksubstanz eine Art, vorzugsweise wenigstens zwei verschiedene Arten, einer dispergierten Phase aufweist.

8. Abdichtung nach einem der vorhergehenden Ansprüche, **dadurch gekennzeichnet, dass** die Wirksubstanz ein, vorzugsweise wasserquellbares, Polymer, insbesondere ein Liquiddispersionspolymer oder ein Superabsorberpolymer, aufweist.

9. Abdichtung nach einem der vorhergehenden Ansprüche, **dadurch gekennzeichnet, dass** der Träger auf einer oder auf beiden seiner Flächenseiten Wirksubstanz aufweist.

10. Abdichtung nach einem der vorhergehenden Ansprüche, **dadurch gekennzeichnet, dass** die Abdichtung auf wenigstens einer Flächenseite des Trägers eine vordefinierte Mindest-Rauigkeit aufweist.

11. Abdichtung nach einem der vorhergehenden Ansprüche, **dadurch gekennzeichnet, dass** die Abdichtung auf wenigstens einer Flächenseite des Trägers eine, vorzugsweise wasser- und/oder gasundurchlässige, Kaschierung aufweist.

12. Verfahren zur Herstellung eines abgedichteten Betonelements, **dadurch gekennzeichnet, dass**
a) eine Seite einer Schalung mit einer Abdichtung nach einem der vorhergehenden Ansprüche ausgerüstet wird und
b) gegen die mit der Abdichtung ausgerüstete Seite der Schaltung betoniert wird.

13. Verfahren nach Anspruch 12, **dadurch gekennzeichnet, dass** die Abdichtung an die Seite der Schalung geheftet, insbesondere mit einem Tacker geheftet, wird.

## Geänderte Patentansprüche

### Geänderte Patentansprüche gemäss Regel 137(2) EPÜ.

1. Abdichtung für ein Betonelement, umfassend einen flächigen Träger und eine auf den Träger aufgebrachte Wirksubstanz, wobei die Wirksubstanz mit Wasser chemisch reagierend ausgebildet ist und wobei der Träger flexibel ist, **dadurch gekennzeichnet, dass** die Abdichtung nach ihrer Herstellung, insbesondere vor Verwendung zur Abdichtung eines Betonelements, mindestens schwach wasserdurchlässig ist.

2. Abdichtung nach einem der vorhergehenden Ansprüche, **dadurch gekennzeichnet, dass** der Träger als Geomembran, Geotextilie, Folie und/oder Vlies, insbesondere als PP-Vlies, als PE-Vlies, als PE-Gewebe, als PP-Gewebe, als Vlies-Gewebe-Kombination, besonders bevorzugt als mechanisch verbundene Vlies-Gewebe-Kombination, ausgebildet ist.

3. Abdichtung nach einem der vorhergehenden Ansprüche, **dadurch gekennzeichnet, dass** die Wirksubstanz einen Zement, Quarz, ein Silikat, eine Asche, insbesondere Flugasche, ein Calciumhydroxid, ein Carbonat, insbesondere ein Hydrogencarbonat, ein Nichthydrogen-Carbonat und/oder Calciumcarbonat, aufweist oder ein solcher bzw. ein solches ist.

4. Abdichtung nach einem der vorhergehenden Ansprüche, **dadurch gekennzeichnet, dass** die Wirksubstanz einen Haftvermittler enthält.

5. Abdichtung nach einem der vorhergehenden Ansprüche, **dadurch gekennzeichnet, dass** die Wirksubstanz ein Elastifizierungsmittel aufweist.

6. Abdichtung nach einem der vorhergehenden Ansprüche, **dadurch gekennzeichnet, dass** die Wirksubstanz eine Art, vorzugsweise wenigstens zwei verschiedene Arten, einer dispergierten Phase aufweist.

7. Abdichtung nach einem der vorhergehenden Ansprüche, **dadurch gekennzeichnet, dass** die Wirksubstanz ein, vorzugsweise wasserquellbares, Polymer, insbesondere ein Liquiddispersionspolymer oder ein Superabsorberpolymer, aufweist.

8. Abdichtung nach einem der vorhergehenden Ansprüche, **dadurch gekennzeichnet, dass** der Träger auf einer oder auf beiden seiner Flächenseiten Wirksubstanz aufweist.

9. Abdichtung nach einem der vorhergehenden Ansprüche, **dadurch gekennzeichnet, dass** die Abdichtung auf wenigstens einer Flächenseite des Trägers eine vordefinierte Mindest-Rauigkeit aufweist.

10. Abdichtung nach einem der vorhergehenden Ansprüche, **dadurch gekennzeichnet, dass** die Abdichtung auf wenigstens einer Flächenseite des Trägers eine, vorzugsweise wasser- und/oder gasundurchlässige, Kaschierung aufweist.

11. Verfahren zur Herstellung eines abgedichteten Betonelements, **dadurch gekennzeichnet, dass**
a) eine Seite einer Schalung mit einer Abdichtung nach einem der vorhergehenden Ansprüche ausgerüstet wird und
b) gegen die mit der Abdichtung ausgerüstete Seite der Schaltung betoniert wird.

12. Verfahren nach Anspruch 11, **dadurch gekennzeichnet, dass** die Abdichtung an die Seite der Schalung geheftet, insbesondere mit einem Tacker geheftet, wird.
